# EUROPÄISCHE PATENTSCHRIFT

(11) **EP 4 311 625 B1**
(45) Veröffentlichungstag und Bekanntmachung des Hinweises auf die Patenterteilung: **20.11.2024**
(21) Anmeldenummer: 22187789.7
(22) Anmeldetag: 29.07.2022
(51) Int. Cl.: B23Q 3/155, B23Q 3/157

(54) **WERKZEUG-KETTENMAGAZIN MIT WERKZEUGGREIFERN UND MIT KETTENKRÜMMUNGSGESTEUERTER VERRIEGELUNG DER WERKZEUGGREIFER**
TOOL CHAIN MAGAZINE WITH TOOL GRIPPERS AND CHAIN CURVATURE-CONTROLLED LOCKING OF THE TOOL GRIPPER
MAGAZINE DE CHAÎNE D'OUTILS COMPORTANT DES PRÉHENSEURS D'OUTIL ET UN VERROUILLAGE DU PRÉHENSEUR D'OUTIL COMMANDÉ PAR LA COURBURE DE LA CHAÎNE

(43) Veröffentlichungstag der Anmeldung: 31.01.2024
(73) Patentinhaber: Schwäbische Werkzeugmaschinen GmbH, 78713 Schramberg-Waldmössingen (DE)
(72) Erfinder: Armleder, Wolfgang, 78628 Rottweil (DE); Schwind, Robert, 78727 Oberndorf (DE)
(74) Vertreter: Kohler Schmid Möbus Patentanwälte

(56) Entgegenhaltungen:
- EP-A1- 0 481 275
- JP-A- 2000 158 276
- KR-B1- 102 086 943

## Beschreibung

Die Erfindung betrifft ein Kettenmagazin für Werkzeuge einer Werkzeugmaschine mit einer umlaufenden Magazinkette mit gelenkig miteinander verbundenen Kettengliedern, von denen zumindest eines als Werkzeuggreifer ausgebildet ist, wobei der Werkzeuggreifer zwei Backen, von denen mindestens eine schwenkbar gelagert ist, zum Greifen der Werkzeuge sowie einen Steuerbolzen aufweist, der zwischen einer Öffnungs- und einer Schließstellung axialverschiebbar gelagert ist und die Schwenkbewegung der mindestens einen schwenkbaren Backe steuert, um in der Öffnungsstellung die mindestens eine schwenkbare Backe zum Ein- und Ausführen der Werkzeuge zu öffnen und in der Schließstellung die mindestens eine schwenkbare Backe zum Greifen der Werkzeuge zu schließen.

Ein derartiges Kettenmagazin ist beispielsweise durch die DE 40 31 996 A1 2. oder der KR 102 086 943 B1 bekannt geworden.

Werkzeug-Kettenmagazine dienen als Werkzeugspeicher für Bearbeitungszentren und ermöglichen das automatische Einwechseln von Werkzeugen. Die Kettenglieder der Magazinkette sind als Werkzeuggreifer zum Greifen von Werkzeugen ausgebildet, welche mithilfe des Werkzeuggreifers aus dem Werkzeug-Kettenmagazin in eine Bearbeitungsspindel des Bearbeitungszentrums und umgekehrt gewechselt werden.

Bei vertikal ausgerichteten Werkzeug-Kettenmagazinen wirkt auf ein im Werkzeuggreifer aufgenommenes Werkzeug neben der Gewichtskraft zusätzlich in gekrümmten Kettenabschnitten die Fliehkraft, welche bei heutiger Kinematik bis zu 220 % der Gewichtskraft betragen kann. Somit besteht das Risiko, dass die in einem gekrümmten Kettenabschnitt auf das aufgenommene Werkzeug wirkenden Kräfte zu einem Verschieben des Steuerbolzens und damit zu einem Öffnen der Backen und einem Herausschleudern des Werkzeugs führen.

Es ist demgegenüber die Aufgabe der Erfindung, bei einem Kettenmagazin der eingangs genannten Art ein Öffnen der Backen in einem gekrümmten Kettenabschnitt sicher zu verhindern.

Diese Aufgabe wird bei einem Kettenmagazin der eingangs genannten Art erfindungsgemäß durch eine kettenkrümmungsgesteuerte Verriegelung des Steuerbolzens gelöst, die, wenn der geschlossene Werkzeuggreifer und sein Nachbarkettenglied gegeneinander verkippt sind, den Steuerbolzen in der Schließstellung verriegelt und, wenn der geschlossene Werkzeuggreifer und sein Nachbarkettenglied nicht gegeneinander verkippt sind, den Steuerbolzen in der Schließstellung nicht verriegelt.

Erfindungsgemäß ist der Steuerbolzen, wenn sich der Werkzeuggreifer auf einem gekrümmten Kettenabschnitt befindet, in seiner Schließstellung verriegelt und, wenn sich der Werkzeuggreifer auf einem nicht-gekrümmten Kettenabschnitt befindet, in seiner Schließstellung nicht verriegelt. Somit ist der Steuerbolzen nur in einem nicht-gekrümmten Kettenabschnitt, wo keine Fliehkraft wirkt, für eine Bewegung in Öffnungsrichtung freigegeben.

Besonders bevorzugt weist die Verriegelung des Werkzeuggreifers mindestens ein von einem seiner beiden Nachbarkettenglieder gesteuertes, beweglich gelagertes Verriegelungselement auf, das, wenn der geschlossene Werkzeuggreifer und sein Nachbarkettenglied gegeneinander verkippt sind, in einer den Steuerbolzen in Schließstellung verriegelnden Verriegelungsstellung und, wenn der geschlossene Werkzeuggreifer und sein Nachbarkettenglied nicht gegeneinander verkippt sind, in einer den Steuerbolzen in Schließstellung nicht verriegelnden Freigabestellung ist. Insbesondere bei schweren Werkzeugen weist die Verriegelung des Werkzeuggreifers vorteilhaft zwei von jeweils einem der beiden Nachbarkettenglieder gesteuerte Verriegelungselemente auf, die, wenn der geschlossene Werkzeuggreifer und sein Nachbarkettenglied gegeneinander verkippt sind, jeweils in der Verriegelungsstellung und, wenn der geschlossene Werkzeuggreifer und seine Nachbarkettenglieder nicht gegeneinander verkippt sind, jeweils in der Freigabestellung sind.

Vorzugsweise ist das mindestens eine Verriegelungselement mittels einer Rückstellkraft, z.B. einer Rückstellfeder, in die Freigabestellung vorgespannt und somit aus der Freigabestellung gegen die Wirkung der Rückstellkraft in die Verriegelungsstellung bewegbar.

Das Verriegelungselement kann zwischen der Freigabe- und der Verriegelungsstellung beispielsweise schwenkbar oder, was bevorzugt ist, linearverschiebbar geführt sein. Im letzteren Fall kann das Verriegelungselement vorteilhaft als Verriegelungsbolzen oder -stift ausgeführt sein.

In einer bevorzugten Ausführungsform weist das am Werkzeuggreifer um eine Gelenkachse schwenkbar gelagerte Nachbarkettenglied eine sich um die Gelenkachse herum erstreckende Steuerkurve auf, welche die Bewegung des Verriegelungselements derart steuert, dass das Verriegelungselement, wenn der geschlossene Werkzeuggreifer und sein Nachbarkettenglied gegeneinander verkippt sind, in der Verriegelungsstellung und, wenn der geschlossene Werkzeuggreifer und sein Nachbarkettenglied nicht gegeneinander verkippt sind, in der Freigabestellung ist.

Die Steuerkurve kann beispielsweise eine Kulisse sein, in der das Verriegelungselement geführt ist, oder, was bevorzugt ist, durch einen radial nach außen weisenden Außenrand des Nachbarkettengliedes gebildet sein, wobei das Verriegelungselement einenends durch eine Feder in Anlage am Außenrand gehalten ist. Dabei weist die Steuerkurve besonders bevorzugt einen kreisförmigen Kurvenabschnitt, welcher die Gelenkachse als Kreismittelpunkt hat und die Verriegelungsstellung des Verriegelungselements definiert, und eine im kreisförmigen Kurvenabschnitt vorgesehene Mulde auf, welche die Freigabestellung des Verriegelungselements definiert.

Vorzugsweise weist der Steuerbolzen einen in Öffnungsrichtung des Steuerbolzens weisenden Hinterschnitt auf, an dem das Verriegelungselement in der Verriegelungsstellung anliegt und somit den Steuerbolzen in der Schließstellung verriegelt bzw. sperrt.

Statt vom Nachbarkettenglied gesteuert, kann die Verriegelung des Werkzeuggreifers alternativ auch als eine im Werkzeuggreifer integrierte Fliehkraftverriegelung mit einem Verriegelungselement ausgebildet sein, das sich, wenn sich der geschlossene Werkzeuggreifer entlang eines nicht-gekrümmten Kettenabschnittes bewegt, in einer Freigabestellung befindet und, wenn sich der geschlossene Werkzeuggreifer entlang eines gekrümmten Kettenabschnittes bewegt, fliehkraftbedingt aus der Freigabestellung gegen die Wirkung einer Rückstellkraft radial nach außen in eine Verriegelungsstellung bewegt ist.

Der Werkzeuggreifer weist bevorzugt zwei schwenkbare Backen auf, die um parallele Schwenkachsen schwenkbar gelagert sind, wobei der Steuerbolzen mittig zwischen den beiden Backen und mit seiner Bolzenachse rechtwinklig zu der von den beiden parallelen Schwenkachsen aufgespannten Ebene angeordnet ist. Statt zweier Schwenkachsen kann alternativ auch eine gemeinsame Schwenkachse für beide Backen vorhanden sein, wobei der Steuerbolzen mittig zwischen den beiden Backen und mit seiner Bolzenachse rechtwinklig zur gemeinsamen Schwenkachse verlaufen kann.

Insbesondere bei leichten Werkzeugen können ein oder beide Nachbarkettenglieder als Werkzeuggreifer ausgebildet sein. Insbesondere bei schweren Werkzeugen sollte hingegen keines der beiden Nachbarkettenglieder als Werkzeuggreifer ausgebildet sein, um die von diesem Kettenabschnitt aufzunehmenden Kräfte gering zu halten.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden.

Die gezeigten und beschriebenen Ausführungsformen sind nicht als abschließende Aufzählung zu verstehen, sondern haben vielmehr beispielhaften Charakter für die Schilderung der Erfindung. Die Erfindung ist in den Figuren schematisch dargestellt, so dass die wesentlichen Merkmale der Erfindung gut zu erkennen ist. Die Darstellungen sind nicht notwendigerweise maßstäblich zu verstehen.

Es zeigt:
- Fig. 1: schematisch ein Kettenmagazin in Form einer umlaufenden Maga-zinkette, deren Kettenglieder alle als Werkzeuggreifer ausgebildet sind;
- Fign. 2a, 2b: einen herkömmlichen Werkzeuggreifer in einer offenen Greiferstellung (Fig. 2a) und in einer geschlossenen Greiferstellung (Fig. 2b);
- Fig. 3: mehrere benachbarte Werkzeuggreifer eines erfindungsgemäßen Kettenmagazins mit einer kettenkrümmungsgesteuerten Verriegelung der Werkzeuggreifer;
- Fign. 4a, 4b: die in Fig. 3 gezeigte kettenkrümmungsgesteuerten Verriegelung des Werkzeuggreifers in einer Verrieglungsstellung (Fig. 4a) und in einer Freigabestellung (Fig. 4b) eines Verriegelungselements; und
- Fig. 5: eine modifizierte kettenkrümmungsgesteuerte Verriegelung des Werkzeuggreifers mittels zweier Verriegelungselemente.

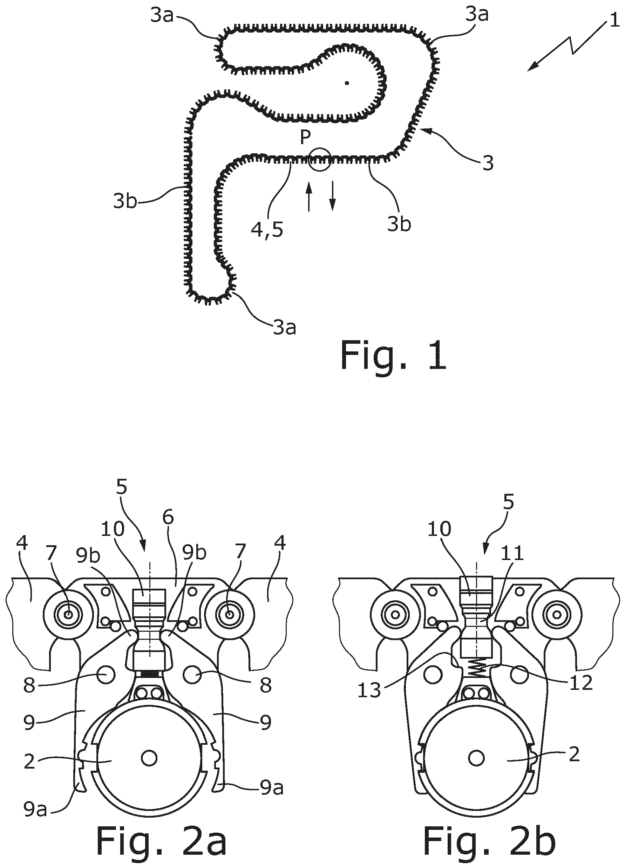

Das in **Fig. 1** insgesamt mit **1** bezeichnete Kettenmagazin dient zur Aufnahme von horizontalen Werkzeugen **2** (Fig. 2) einer spanabhebenden Werkzeugmaschine und weist eine umlaufende Magazinkette **3** mit gelenkig miteinander verbundenen Kettengliedern **4** auf, die alle als Werkzeuggreifer **5** ausgebildet sind. Die von der Magazinkette 3 definierte Kettenebene verläuft hier vollständig in einer Vertikalebene, aber kann auch nur abschnittsweise in einer Vertikalebene verlaufen. Die Magazinkette 3 weist sowohl gekrümmte Kettenabschnitte **3a** als auch nicht gekrümmte, also lineare Kettenabschnitte **3b** auf. Die Wechselposition **P** zum Ein- und Auswechseln von Werkzeugen 2 in die bzw. aus der Werkzeugmaschine befindet sich auf einem nicht gekrümmten, hier horizontalen Kettenabschnitt 3b.

Der in **Fign. 2a, 2b** gezeigte herkömmliche Werkzeuggreifer 5 weist einen Grundkörper **6,** an dem beidseitig jeweils mittels eines Gelenkbolzens Kettenglieder 4 schwenkbar um eine Gelenkachse **7** angelenkt sind, zwei am Grundkörper 6 um jeweils parallel zu den Gelenkachsen 7 verlaufende Schwenkachsen **8** schwenkbar gelagerte Backen **9** zum Greifen der Werkzeuge 2 sowie einen mittig zwischen den beiden Backen 9 und mit seiner Bolzenachse rechtwinklig zu der von den beiden Schwenkachsen 8 aufgespannten Ebene angeordneten Steuerbolzen **10** auf. Der Steuerbolzen 10 ist zwischen der in Fig. 2a gezeigten, unteren Öffnungsstellung und der in Fig. 2b gezeigten, oberen Schließstellung axialverschiebbar gelagert und weist eine die Schwenkbewegung der beiden Backen 9 steuernde Steuerkontur **11** auf, welche in der Öffnungsstellung des Steuerbolzens 10 die Backen 9 zum Ein- und Ausführen der Werkzeuge 2 öffnet bzw. aufspreizt und in der Schließstellung die Backen 9 zum Greifen der Werkzeuge 2 schließt.

Wie gezeigt, können die beiden Backen 9 beispielsweise jeweils als doppelarmiger Hebel ausgebildet sein, wobei der eine, in Fign. 2a, 2b untere Hebelarm **9a** den Greifarm ausbildet und der andere, in Fign. 2a, 2b obere Hebelarm **9b** mit der axialen Steuerkontur 11 zusammenwirkt. Durch eine Feder **12,** die einenends am Grundkörper 6 und anderenends am Steuerbolzen 10 abgestützt ist, ist der Steuerbolzen 10 in die Schließstellung vorgespannt.

Wenn der Steuerbolzen 10 mittels eines hier nicht gezeigten (z.B. hydraulischen) Antriebs aus der Schließstellung (Fig. 2b) gegen die Wirkung der Feder 12 nach unten in die Öffnungsstellung (Fig. 2a) verfahren wird, lenkt er - hier mithilfe eines an den Backen 9 vorhandenen Absatzes **13** - die Backen 9 aus der geschlossenen in die geöffnete Greiferstellung aus, wobei die oberen Hebelarme 9b nach innen geschwenkt werden, und zwar bis zur Anlage an der axialen Steuerkontur 11. Wenn der Steuerbolzen 10 mittels des Antriebs aus der Öffnungsstellung (Fig. 2a) nach oben in die Schließstellung (Fig. 2a) verfahren wird, werden die oberen Hebelarme 9b durch die axiale Steuerkontur 11 nach außen ausgelenkt und somit die Backen 9 in die geschlossene Greiferstellung geschwenkt.

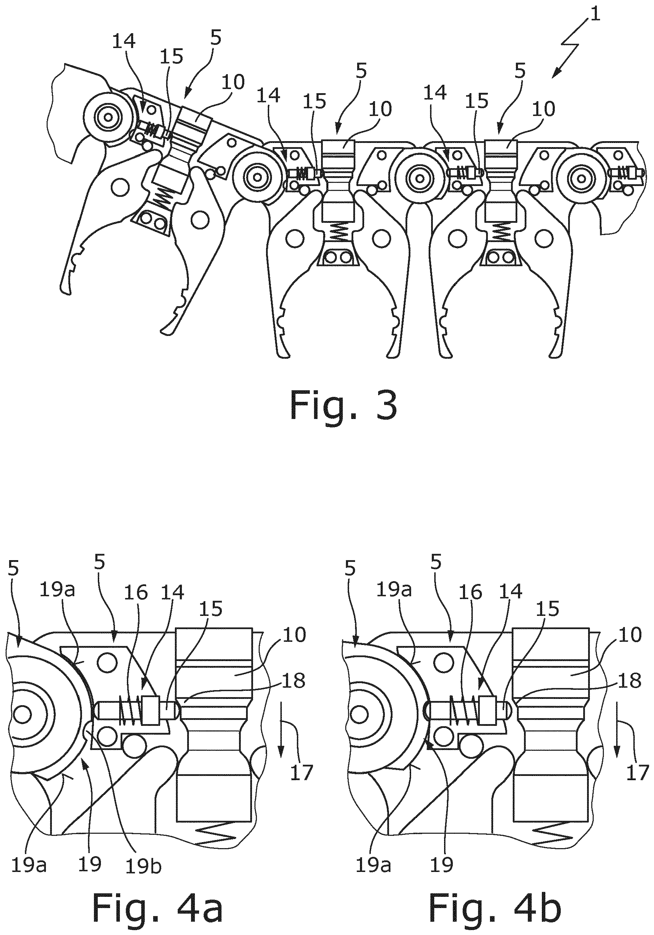

**Fig. 3** zeigt drei benachbarte Werkzeuggreifer 5 eines erfindungsgemäßen Kettenmagazins 1. Die Werkzeuggreifer 5 weisen jeweils eine kettenkrümmungsgesteuerte Verriegelung **14** ihres Steuerbolzens 10 auf, die, wenn der geschlossene Werkzeuggreifer 5 und sein Nachbarwerkzeuggreifer 5 gegeneinander verkippt sind, den Steuerbolzen 10 in der Schließstellung verriegelt und, wenn der geschlossene Werkzeuggreifer 5 und sein Nachbarwerkzeuggreifer 5 nicht gegeneinander verkippt sind, den Steuerbolzen 10 in der Schließstellung nicht verriegelt. Die Steuerbolzen 10 der Werkzeuggreifer 5 sind also, in Abhängigkeit der jeweiligen Kettenkrümmung des zugehörigen Kettenabschnitts 3a, 3b, mittels der Verriegelung 14 in der Schließstellung verriegelt oder nicht verriegelt.

Wie in **Fign. 4a, 4b** näher gezeigt, weist die Verriegelung 14 des rechten Werkzeuggreifers 5 ein von dem benachbarten linken Werkzeuggreifer 5 gesteuertes, beweglich gelagertes Verriegelungselement **15** auf, das, wenn der geschlossene, rechte Werkzeuggreifer 5 und der linke Werkzeuggreifer 5 gegeneinander verkippt sind, in einer den Steuerbolzen 10 in Schließstellung verriegelnden Verriegelungsstellung (Fig. 4a) ist und, wenn der geschlossene, rechte Werkzeuggreifer 5 und der linke Werkzeuggreifer 5 nicht gegeneinander verkippt sind, in einer den Steuerbolzen 10 in Schließstellung nicht verriegelnden Freigabestellung (Fig. 4b) ist. Das Verriegelungselement 15, hier in Form eines Verriegelungsstifts, ist zwischen der Freigabe- und der Verriegelungsstellung, hier rechtwinklig zur Bolzenachse des Steuerbolzens 10, linearverschiebbar geführt und aus der Freigabestellung gegen die Wirkung einer am Grundkörper 6 abgestützten Rückstellfeder **16** in die Verriegelungsstellung bewegbar. In der Verriegelungsstellung liegt das Verriegelungselement 15 an einem in Öffnungsrichtung **17** des Steuerbolzens 10 weisenden Hinterschnitt **18** des Steuerbolzens 10 an, der dadurch in seiner Schließstellung verriegelt ist.

Der in Fign. 4a, 4b linke Werkzeuggreifer 5 weist eine sich um die Gelenkachse 7 herum erstreckende Steuerkurve **19** auf, welche die Bewegung des Verriegelungselements 15 derart steuert, dass das Verriegelungselement 15, wenn der geschlossene, rechte Werkzeuggreifer 5 und der linke Werkzeuggreifer 5 gegeneinander verkippt sind, in der Verriegelungsstellung und, wenn der geschlossene, rechte Werkzeuggreifer 5 und der linke Werkzeuggreifer 5 nicht gegeneinander verkippt sind, in der Freigabestellung ist. Die Steuerkurve 19 ist durch einen radial nach außen weisenden Außenrand des linken Werkzeuggreifers 5 gebildet, wobei das Verriegelungselement 15 durch die Rückstellfeder 16 in Anlage am Außenrand gehalten ist. Der Außenrand weist einen kreisförmigen Kurvenabschnitt **19a,** welcher die Gelenkachse 7 als Kreismittelpunkt hat und die Verriegelungsstellung des Verriegelungselements 15 definiert, und eine im kreisförmigen Kurvenabschnitt 19a vorgesehene Mulde **19b,** welche die Freigabestellung des Verriegelungselements 15 definiert, auf.

In Fig. 4a sind die beiden Werkzeuggreifer 5 gegeneinander verkippt, wodurch das Verriegelungselement 15 vom kreisförmigen Kurvenabschnitt 19a in der Verriegelungsstellung gehalten ist. Sobald, wie in Fig. 4b gezeigt, die beiden Werkzeuggreifer 5 nicht mehr gegeneinander verkippt sind, wird das Verriegelungselement 10 von der Rückstellfeder 16 in die Mulde 19b, also in die nicht verriegelte Freigabestellung, geschoben.

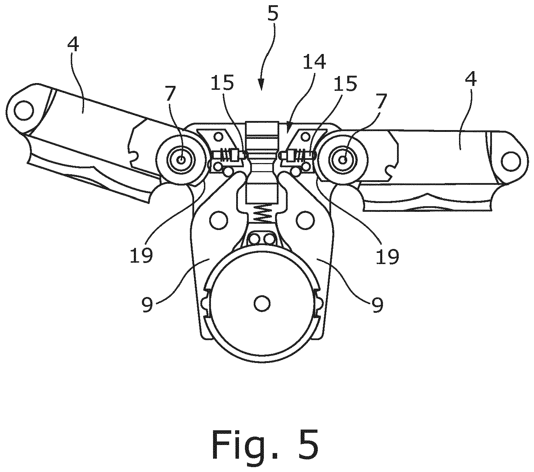

In **Fig. 5** weist die kettenkrümmungsgesteuerte Verriegelung 14 des Werkzeuggreifers 5 zwei jeweils von einem der beiden Nachbarkettenglieder 4 gesteuerte Verriegelungselemente 15 auf. Wenn einer oder beide Nachbarkettenglieder 4 gegenüber dem geschlossenen Werkzeuggreifer 5 verkippt sind, sind einer bzw. beide Verriegelungselemente 15 in der Verriegelungsstellung, und der Steuerbolzen 10 ist in der Schließstellung verriegelt. Nur wenn beide Nachbarkettenglieder 4 gegenüber dem geschlossenen Werkzeuggreifer 5 nicht verkippt sind, sind beide Verriegelungselemente 15 in der Freigabestellung, und der Steuerbolzen 10 ist in der Schließstellung nicht verriegelt. In Fig. 5 ist das linke Nachbarkettenglied 4 gegenüber dem geschlossenen Werkzeuggreifer 5 verkippt und somit das linke Verriegelungselement 15 in Verriegelungsstellung. Das rechte Nachbarkettenglied 4 ist gegenüber dem geschlossenen Werkzeuggreifer 5 nicht verkippt und somit das rechte Verriegelungselement 15 in Freigabestellung. Im Ergebnis ist der Steuerbolzen 10 in seiner Schließstellung durch das linke Verriegelungselement 15 verriegelt.

In einer nicht gezeigten Ausführungsform der Erfindung kann die Verriegelung des Werkzeuggreifers 5 alternativ auch als eine im Werkzeuggreifer 5 integrierte Fliehkraftverriegelung mit einem Verriegelungselement (z.B. Kugel) ausgebildet sein, das sich, wenn sich der geschlossene Werkzeuggreifer entlang eines nicht-gekrümmten Kettenabschnittes 3b bewegt, in der Freigabestellung befindet und, wenn sich der geschlossene Werkzeuggreifer 5 entlang eines gekrümmten Kettenabschnittes 3a bewegt, fliehkraftbedingt aus der Freigabestellung gegen die Wirkung einer Rückstellfeder radial nach außen in eine Verriegelungsstellung bewegt wird.

## Patentansprüche

1. Kettenmagazin (1) für Werkzeuge (2) einer Werkzeugmaschine, mit einer umlaufenden Magazinkette (3) mit gelenkig miteinander verbundenen Kettengliedern (4, 5), von denen zumindest eines als Werkzeuggreifer (5) ausgebildet ist, wobei der Werkzeuggreifer (5) zwei Backen (9), von denen mindestens eine schwenkbar gelagert ist, zum Greifen der Werkzeuge (2) sowie einen Steuerbolzen (10) aufweist, der zwischen einer Öffnungs- und einer Schließstellung axialverschiebbar gelagert ist und die Schwenkbewegung der mindestens einen schwenkbaren Backe (9) steuert, um in der Öffnungsstellung die mindestens eine schwenkbare Backe (9) zum Ein- und Ausführen der Werkzeuge (2) zu öffnen und in der Schließstellung die mindestens eine schwenkbare Backe (9) zum Greifen der Werkzeuge (2) zu schließen,
**gekennzeichnet durch** eine kettenkrümmungsgesteuerte Verriegelung (14) des Steuerbolzens (10), die, wenn der geschlossene Werkzeuggreifer (5) und sein Nachbarkettenglied (4) gegeneinander verkippt sind, den Steuerbolzen (10) in der Schließstellung verriegelt und, wenn der geschlossene Werkzeuggreifer (5) und sein Nachbarkettenglied (4) nicht gegeneinander verkippt sind, den Steuerbolzen (10) in der Schließstellung nicht verriegelt.

2. Kettenmagazin nach Anspruch 1, **dadurch gekennzeichnet, dass** die Verriegelung (14) des Werkzeuggreifers (5) mindestens ein von einem seiner beiden Nachbarkettenglieder (4) gesteuertes, beweglich gelagertes Verriegelungselement (15) aufweist, das, wenn der geschlossene Werkzeuggreifer (5) und sein Nachbarkettenglied (4) gegeneinander verkippt sind, in einer den Steuerbolzen (10) in Schließstellung verriegelnden Verriegelungsstellung und, wenn der geschlossene Werkzeuggreifer (5) und sein Nachbarkettenglied (4) nicht gegeneinander verkippt sind, in einer den Steuerbolzen (10) in Schließstellung nicht verriegelnden Freigabestellung ist.

3. Kettenmagazin nach Anspruch 1 oder 2, **dadurch gekennzeichnet, dass** die Verriegelung (14) des Werkzeuggreifers (5) zwei von jeweils einem der beiden Nachbarkettenglieder (4) gesteuerte Verriegelungselemente (15) aufweist, die, wenn der geschlossene Werkzeuggreifer (5) und seine Nachbarkettenglieder (4) gegeneinander verkippt sind, jeweils in der Verriegelungsstellung und, wenn der geschlossene Werkzeuggreifer (5) und seine Nachbarkettenglieder (4) nicht gegeneinander verkippt sind, jeweils in der Freigabestellung sind.

4. Kettenmagazin nach Anspruch 2 oder 3, **dadurch gekennzeichnet, dass** das mindestens eine Verriegelungselement (15) aus der Freigabestellung gegen die Wirkung einer Rückstellkraft, insbesondere einer Rückstellfeder (16), in die Verriegelungsstellung bewegbar ist

5. Kettenmagazin nach einem der Ansprüche 2 bis 4, **dadurch gekennzeichnet, dass** das Verriegelungselement (15) zwischen der Freigabe- und der Verriegelungsstellung linearverschiebbar, insbesondere rechtwinklig zur Bolzenachse des Steuerbolzens (10), geführt ist.

6. Kettenmagazin nach einem der Ansprüche 2 bis 5, **dadurch gekennzeichnet, dass** das Nachbarkettenglied (4) am Werkzeuggreifer (5) um eine Gelenkachse (7) schwenkbar gelagert ist und eine sich um die Gelenkachse (7) herum erstreckende Steuerkurve (19) aufweist, welche die Bewegung des Verriegelungselements (15) derart steuert, dass das Verriegelungselement (15), wenn der geschlossene Werkzeuggreifer (5) und sein Nachbarkettenglied (4) gegeneinander verkippt sind, in der Verriegelungsstellung und, wenn der geschlossene Werkzeuggreifer (5) und sein Nachbarkettenglied (4) nicht gegeneinander verkippt sind, in der Freigabestellung ist.

7. Kettenmagazin nach Anspruch 6, **dadurch gekennzeichnet, dass** die Steuerkurve (19) durch einen radial nach außen weisenden Außenrand des Nachbarkettengliedes (4) gebildet ist, wobei das Verriegelungselement (15) durch eine Feder (16) in Anlage am Außenrand gehalten ist.

8. Kettenmagazin nach Anspruch 7, **dadurch gekennzeichnet, dass** der Außenrand einen sich kreisförmigen Kurvenabschnitt (19a), welcher die Gelenkachse (7) als Kreismittelpunkt hat und die Verriegelungsstellung des Verriegelungselements (15) definiert, und eine im kreisförmigen Kurvenabschnitt (19a) vorgesehene Mulde (19b), welche die Freigabestellung des Verriegelungselements (15) definiert, aufweist.

9. Kettenmagazin nach einem der Ansprüche 2 bis 8, **dadurch gekennzeichnet, dass** der Steuerbolzen (10) einen in Öffnungsrichtung (17) des Steuerbolzens (10) weisenden Hinterschnitt (18) auf, an dem das Verriegelungselement (15) in der Verriegelungsstellung anliegt.

10. Kettenmagazin nach Anspruch 1 oder 2, **dadurch gekennzeichnet, dass** die Verriegelung (14) des Werkzeuggreifers (5) als Fliehkraftverriegelung mit einem Verriegelungselement ausgebildet ist, das sich, wenn sich der geschlossene Werkzeuggreifer (5) entlang eines nicht-gekrümmten Kettenabschnittes (3b) bewegt, in einer Freigabestellung befindet und, wenn sich der geschlossene Werkzeuggreifer (5) entlang eines gekrümmten Kettenabschnittes (3a) bewegt, fliehkraftbedingt aus der Freigabestellung gegen die Wirkung einer Rückstellkraft radial nach außen in eine Verriegelungsstellung bewegt ist.

11. Kettenmagazin nach einem der vorhergehenden Ansprüche, **gekennzeichnet durch** zwei schwenkbare Backen (9), die um parallele Schwenkachsen (8) schwenkbar gelagert sind, wobei der Steuerbolzen (10) mittig zwischen den beiden Backen (9) und mit seiner Bolzenachse rechtwinklig zu der von den beiden parallelen Schwenkachsen (8) aufgespannten Ebene angeordnet ist.

12. Kettenmagazin nach einem der vorhergehenden Ansprüche, **dadurch gekennzeichnet, dass** eines oder beide Nachbarkettenglieder (4) als Werkzeuggreifer (5) ausgebildet sind.

13. Kettenmagazin nach einem der Ansprüche 1 bis 11, **dadurch gekennzeichnet, dass** keines der beiden Nachbarkettenglieder (4) als Werkzeuggreifer ausgebildet ist.

14. Kettenmagazin nach einem der vorhergehenden Ansprüche, **dadurch gekennzeichnet, dass** die von der Magazinkette (3) definierte Kettenebene zumindest abschnittsweise, insbesondere vollständig, in einer Vertikalebene verläuft.

## Claims

1. Chain magazine (1) for tools (2) of a machine tool, comprising a circulating magazine chain (3) with chain links (4, 5) which are connected to one another in an articulated manner and of which at least one is designed as a tool gripper (5), wherein the tool gripper (5) has two jaws (9), at least one of which is pivotably mounted, for gripping the tools (2) and a control pin (10) which is mounted so as to be axially displaceable between an open position and a closed position and controls the pivoting movement of the at least one pivotable jaw (9) in order to open the at least one pivotable jaw (9) in the open position for inserting and removing the tools (2) and to close the at least one pivotable jaw (9) in the closed position for gripping the tools (2), **characterized by** a locking mechanism (14) of the control pin (10), which locking mechanism is controlled by the curvature of the chain and, when the closed tool gripper (5) and its neighboring chain link (4) are tilted towards each other, locks the control pin (10) in the closed position and when the closed tool gripper (5) and its neighboring chain link (4) are not tilted towards each other, does not lock the control pin (10) in the closed position.

2. Chain magazine according to claim 1, **characterized in that** the locking mechanism (14) of the tool gripper (5) has at least one movably mounted locking element (15) which is controlled by one of its two neighboring chain links (4) and which, when the closed tool gripper (5) and its neighboring chain link (4) are tilted relative to one another is in a locking position locking the control pin (10) in the closed position and, when the closed tool gripper (5) and its neighboring chain link (4) are not tilted towards each other, is in a release position which does not lock the control pin (10) in the closed position.

3. Chain magazine according to claim 1 or 2, **characterized in that** the locking mechanism (14) of the tool gripper (5) has two locking elements (15), each controlled by one of the two neighboring chain links (4), which locking elements (15), when the closed tool gripper (5) and its neighboring chain links (4) are tilted towards each other, are each in the locking position and, when the closed tool gripper (5) and its neighboring chain links (4) are not tilted towards each other, are each in the release position.

4. Chain magazine according to claim 2 or 3, **characterized in that** the at least one locking element (15) can be moved from the release position into the locking position against the action of a restoring force, in particular a restoring spring (16).

5. Chain magazine according to one of claims 2 to 4, **characterized in that** the locking element (15) is guided in a linearly displaceable manner between the release position and the locking position, in particular at right angles to the pin axis of the control pin (10).

6. Chain magazine according to one of claims 2 to 5, **characterized in that** the neighboring chain link (4) is pivotably mounted on the tool gripper (5) about a hinge axis (7) and has a control curve (19) which extends around the hinge axis (7) and controls the movement of the locking element (15) in such a way that the locking element (15) is in the locking position when the closed tool gripper (5) and its neighboring chain link (4) are tilted towards each other and is in the release position when the closed tool gripper (5) and its neighboring chain link (4) are not tilted towards each other.

7. Chain magazine according to claim 6, **characterized in that** the control curve (19) is formed by a radially outwardly facing outer edge of the neighboring chain link (4), wherein the locking element (15) is held in contact with the outer edge by a spring (16).

8. Chain magazine according to claim 7, **characterized in that** the outer edge has a circular curve section (19a) with the hinge axis (7) as the center of the circle, which defines the locking position of the locking element (15), and a trough (19b) provided in the circular curve section (19a) which defines the release position of the locking element (15).

9. Chain magazine according to one of claims 2 to 8, **characterized in that** the control pin (10) has an undercut (18) facing in the opening direction (17) of the control pin (10), on which the locking element (15) abuts in the locking position.

10. Chain magazine according to claim 1 or 2, **characterized in that** the locking mechanism (14) of the tool gripper (5) is designed as a centrifugal force locking mechanism with a locking element which, when the closed tool gripper (5) moves along a non-curved chain section (3b), is in a release position and, when the closed tool gripper (5) moves along a curved chain section (3a), moves radially outwards against the action of a restoring force due to centrifugal force from the release position into a locking position.

11. Chain magazine according to one of the preceding claims, **characterized by** two pivotable jaws (9), which are pivotably mounted about parallel pivot axes (8), wherein the control pin (10) is centrally located between the two jaws (9) and arranged with its pin axis at right angles to the plane spanned by the two parallel pivot axes (8).

12. Chain magazine according to one of the preceding claims, **characterized in that** one or both neighboring chain links (4) are designed as tool grippers (5).

13. Chain magazine according to one of claims 1 to 11, **characterized in that** neither of the two neighboring chain links (4) is designed as a tool gripper.

14. Chain magazine according to one of the preceding claims, **characterized in that** the chain plane defined by the magazine chain (3) extends at least in sections, in particular completely, in a vertical plane.

## Revendications

1. Magasin (1) à chaîne, destiné à des outils (2) d'une machine-outil et équipé d'une chaîne tournante d'emmagasinage (3) comportant des chaînons (4, 5) reliés les uns aux autres de manière articulée, au sein desquels au moins l'un est conçu en tant que préhenseur (5) d'outils, lequel préhenseur (5) d'outils est muni de deux mâchoires (9) parmi lesquelles au moins l'une est montée avec faculté de pivotement en vue de saisir les outils (2), ainsi que d'une broche de commande (10) qui est montée avec faculté de coulissement axial entre des positions d'ouverture et de fermeture, et commande le mouvement pivotant de la mâchoire pivotante (9) à présence minimale afin d'ouvrir ladite mâchoire pivotante (9) à présence minimale, dans la position d'ouverture, en vue d'insérer et d'extraire les outils (2), et afin de fermer ladite mâchoire pivotante (9) à présence minimale, dans la position de fermeture, en vue de saisir lesdits outils (2),
**caractérisé par** un verrouillage (14) de la broche de commande (10) qui, piloté par la courbure de la chaîne, verrouille ladite broche de commande (10) dans la position de fermeture lorsque le préhenseur (5) d'outils à l'état fermé, et son chaînon (4) occupant un emplacement voisin, sont basculés l'un par rapport à l'autre, et ne verrouille pas ladite broche de commande (10) dans ladite position de fermeture, lorsque ledit préhenseur (5) d'outils à l'état fermé, et son chaînon (4) occupant un emplacement voisin, ne sont pas basculés l'un par rapport à l'autre.

2. Magasin à chaîne selon la revendication 1, **caractérisé par le fait que** le verrouillage (14) du préhenseur (5) d'outils est doté d'au moins un élément de verrouillage (15) qui est monté mobile, est piloté par l'un de ses deux chaînons (4) occupant des emplacements voisins, se trouve dans une position de verrouillage verrouillant la broche de commande (10), en position de fermeture, lorsque ledit préhenseur (5) d'outils à l'état fermé, et son chaînon (4) occupant un emplacement voisin, sont basculés l'un par rapport à l'autre, et se trouve dans une position de libération ne verrouillant pas ladite broche de commande (10), en position de fermeture, lorsque ledit préhenseur (5) d'outils à l'état fermé, et son chaînon (4) occupant un emplacement voisin, ne sont pas basculés l'un par rapport à l'autre.

3. Magasin à chaîne selon la revendication 1 ou 2, **caractérisé par le fait que** le verrouillage (14) du préhenseur (5) d'outils est pourvu de deux éléments de verrouillage (15) qui sont respectivement pilotés par l'un des deux chaînons (4) occupant des emplacements voisins, se trouvent, à chaque fois, dans la position de verrouillage lorsque ledit préhenseur (5) d'outils à l'état fermé, et ses chaînons (4) occupant des emplacements voisins, sont animés de basculements mutuels, et se trouvent, à chaque fois, dans la position de libération lorsque ledit préhenseur (5) d'outils à l'état fermé, et ses chaînons (4) occupant des emplacements voisins, ne sont pas animés de basculements mutuels.

4. Magasin à chaîne selon la revendication 2 ou 3, **caractérisé par le fait que** l'élément de verrouillage (15) à présence minimale peut être mû vers la position de verrouillage, à partir de la position de libération, en s'opposant à l'action d'une force de rappel et notamment d'un ressort de rappel (16).

5. Magasin à chaîne selon l'une des revendications 2 à 4, **caractérisé par le fait que** l'élément de verrouillage (15) est guidé avec faculté de coulissement linéaire, entre la position de libération et la position de verrouillage, notamment à angle droit par rapport à l'axe de la broche de commande (10).

6. Magasin à chaîne selon l'une des revendications 2 à 5, **caractérisé par le fait que** le chaînon (4) occupant un emplacement voisin est monté sur le préhenseur (5) d'outils avec faculté de pivotement autour d'un axe d'articulation (7), et est nanti d'une came de commande (19) qui ceinture ledit axe d'articulation (7) et pilote le mouvement de l'élément de verrouillage (15) de façon telle que ledit élément de verrouillage (15) se trouve dans la position de verrouillage lorsque ledit préhenseur (5) d'outils à l'état fermé, et son chaînon (4) occupant un emplacement voisin, sont basculés l'un par rapport à l'autre, et se trouve dans la position de libération lorsque ledit préhenseur (5) d'outils à l'état fermé, et son chaînon (4) occupant un emplacement voisin, ne sont pas basculés l'un par rapport à l'autre.

7. Magasin à chaîne selon la revendication 6, **caractérisé par le fait que** la came de commande (19) est formée par un bord externe du chaînon (4) occupant un emplacement voisin, qui pointe vers l'extérieur dans le sens radial, l'élément de verrouillage (15) étant maintenu en applique contre ledit bord externe par l'intermédiaire d'un ressort (16).

8. Magasin à chaîne selon la revendication 7, **caractérisé par le fait que** le bord externe comprend une région curviligne circulaire (19a) dont l'axe d'articulation (7) matérialise le centre du cercle, et qui définit la position de verrouillage de l'élément de verrouillage (15), et une creusure (19b) prévue dans ladite région curviligne circulaire (19a) et définissant la position de libération dudit élément de verrouillage (15).

9. Magasin à chaîne selon l'une des revendications 2 à 8, **caractérisé par le fait que** la broche de commande (10) est munie d'une contre-dépouille (18) qui pointe dans la direction d'ouverture (17) de ladite broche de commande (10), et contre laquelle l'élément de verrouillage (15) est en applique dans la position de verrouillage.

10. Magasin à chaîne selon la revendication 1 ou 2, **caractérisé par le fait que** le verrouillage (14) du préhenseur (5) d'outils est conçu sous la forme d'un verrouillage à force centrifuge doté d'un élément de verrouillage qui se trouve dans une position de libération lorsque ledit préhenseur (5) d'outils, à l'état fermé, se meut le long d'un tronçon non courbe (3b) de la chaîne et qui, lorsque ledit préhenseur (5) d'outils à l'état fermé se meut le long d'un tronçon courbe (3a) de ladite chaîne, se meut radialement vers l'extérieur de ladite position de libération à une position de verrouillage, sous l'effet de la force centrifuge, en s'opposant à l'action d'une force de rappel.

11. Magasin à chaîne selon l'une des revendications précédentes, **caractérisé par** deux mâchoires pivotantes (9) montées avec faculté de pivotement autour d'axes parallèles de pivotement (8), la broche de commande (10) étant interposée centralement entre lesdites deux mâchoires (9) et étant agencée, par son axe, perpendiculairement au plan dont l'étendue est couverte par les deux axes parallèles de pivotement (8).

12. Magasin à chaîne selon l'une des revendications précédentes, **caractérisé par le fait que** l'un des chaînons (4) ou les deux chaînons, occupant un (des) emplacement(s) voisin(s), est (sont) conçu(s) en tant que préhenseur(s) (5) d'outils.

13. Magasin à chaîne selon l'une des revendications 1 à 11, **caractérisé par le fait qu'**aucun des deux chaînons (4) occupant des emplacements voisins n'est conçu en tant que préhenseur d'outils.

14. Magasin à chaîne selon l'une des revendications précédentes, **caractérisé par le fait que** le plan défini par la chaîne d'emmagasinage (3) s'étend au moins partiellement, en particulier intégralement dans un plan vertical.
